# EUROPEAN PATENT SPECIFICATION

(11) **EP 0 888 767 B1**
(45) Date of publication and mention of the grant of the patent: **25.06.2003**
(21) Application number: 98201132.2
(22) Date of filing: 09.04.1998
(51) Int. Cl.: A61H 33/00, F16K 1/00

(54) **Closure and connection unit, for hydromassage nozzles.**
Schliess- und Anschlusseinheit für Hydromassagedüsen
Unité de fermeture et de connexion pour buses d'hydromassage

(30) Priority: 03.07.1997 IT RE970048
(43) Date of publication of application: 07.01.1999
(73) Proprietor: American Standard Italia S.r.l., 20131 Milano (IT)
(72) Inventor: Artuso, Loris, 33070 S. Giovanni di Casarsa, (pordenone (IT); Moretto, Alessandro, 33080 Castion di Zoppola, (Pordenone) (IT)
(74) Representative: Corradini, Corrado

(56) References cited:
- EP-A- 0 354 596
- EP-A- 0 376 845
- EP-A- 0 418 204
- EP-A- 0 590 228
- DE-A- 3 507 472
- DE-A- 3 717 508
- DE-A- 3 928 464

## Description

This invention relates in a general manner to hydromassage tubs with a piping circuit for circulating water which feeds the water jet emission nozzles, with possible air/ozone addition.

In the most advanced installations it is known to clean the piping system by effecting a wash cycle (by circulating water and detergents, plus possible other substances) through the piping circuit while the nozzles are kept closed, so that the wash liquid does not enter the interior of the tub.

Such a closure unit is disclosed in DE-A-3 717 508.

It is hence important for said nozzles to be able to be effectively closed, in order to hermetically isolate the tub interior from the piping circuit.

It is also useful for the nozzles to be able to be closed so that when water is not being emitted from the nozzles, the water present in the tub is prevented from entering the piping circuit through said nozzles, carrying with it organic particles and dirt. Currently, to close the nozzles it is known to use a valving element, operated by an electrical actuator, to close a water passage section within the nozzle.

This solution has however the drawback that it requires a suitable electrical circuit for operating said actuators, with consequent costs of material, of labour for constructing the circuit, of labour for the consequent complexity of the electronic control card, and with danger to the user because of possible electric current dispersion.

A further drawback is that known nozzle closure devices, because of their construction and arrangement, are compelled to occupy a relatively large space in a horizontal direction perpendicular to the surface of the tub interior, hence contributing to making the plan dimensions of the entire hydromassage tub unnecessarily large.

An object of this invention is therefore to provide nozzle closure means which overcome the aforesaid drawbacks.

This is performed by a closure and connection unit according to claim 1.

Said and other objects are attained by a closure and connection unit for hydromassage nozzles as characterised in the claims.

By virtue of the invention, the nozzle valving elements can be operated by air or water suitably pressurized (a relatively low pressure is sufficient) or even by water originating from the public main.

All the electric cables necessary for nozzle closure are hence eliminated, with consequent elimination of the aforesaid drawbacks deriving from said cables.

Moreover, the unit of the invention has a structure which extends substantially flatly and vertically, and hence such as to occupy a relatively small space compared with the horizontal dimension perpendicular to the plan shape of the tub interior, with a consequent lesser overall plan size for the tub.

A further advantage of the invention lies in the fact that the unit of the invention can be easily applied to any nozzle, ie those not expressly designed for it, given that it requires no special nozzle characteristics.

An advantageous consequence of this is that no special moulds are required (hence involving greater costs) for constructing the nozzles from plastic materials.

The invention is described in detail hereinafter with the aid of the accompanying figures, which illustrate a non-exclusive embodiment thereof.

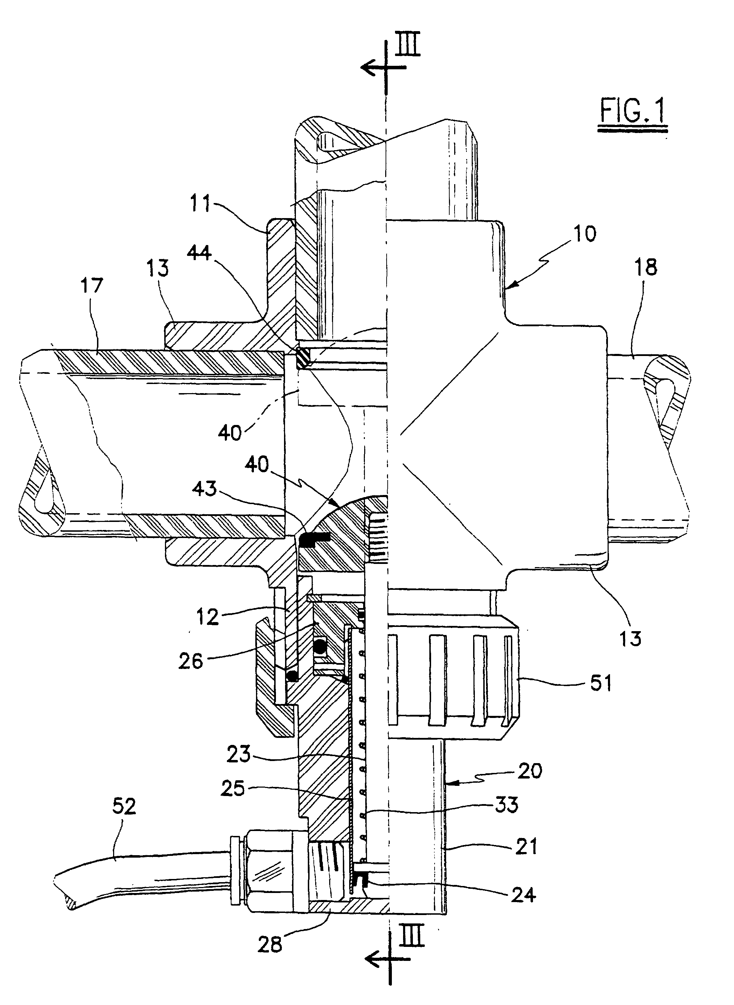

Figure 1 is a partly sectional vertical elevation of the unit of the invention, applied to a piping circuit for hydromassage water circulation.

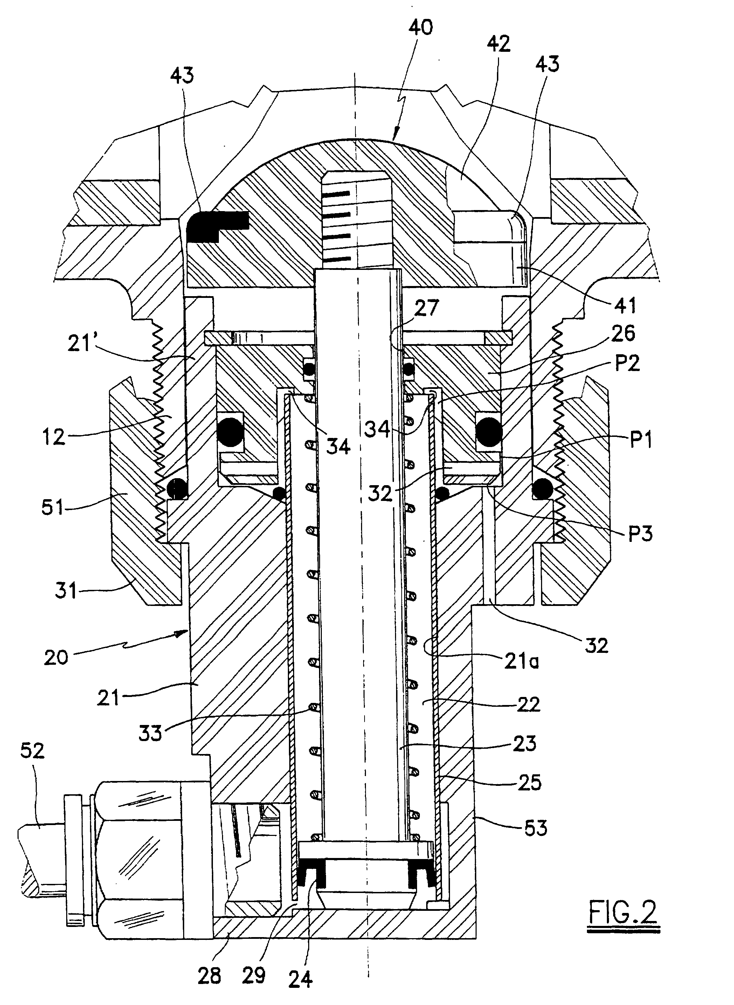

Figure 2 is an enlarged detail of Figure 1.

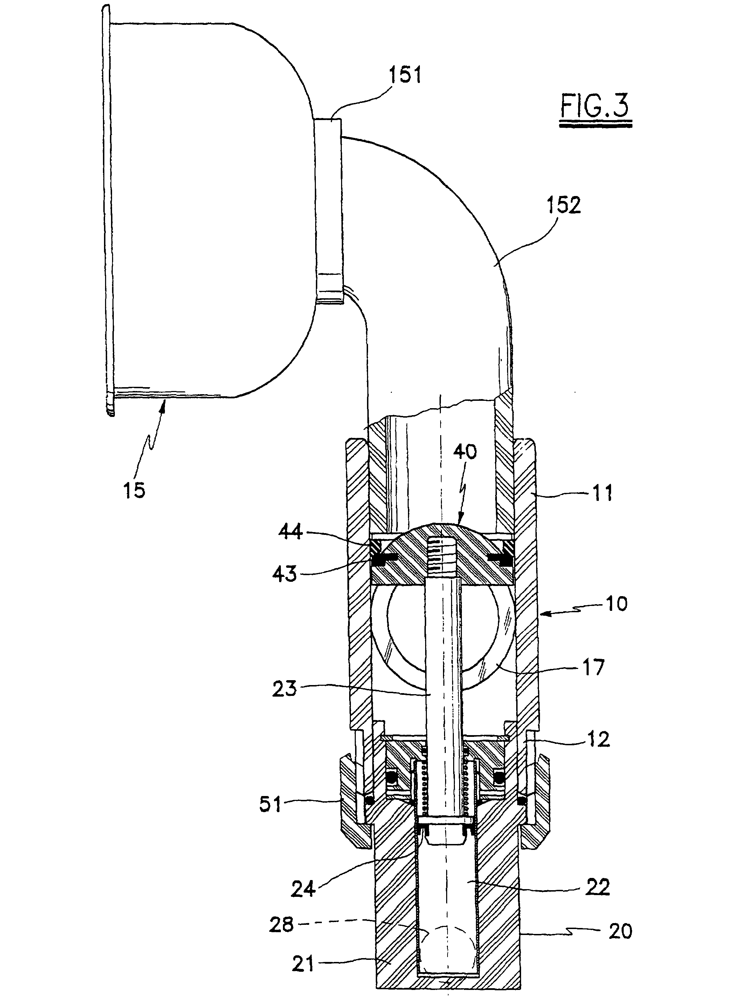

Figure 3 is a section on the plane III-III of Figure 1.

The unit of the invention comprises a connection coupling 10, having a first cylindrical port 11, in particular in the form of a short pipe stub, connected to the inlet 16 of a nozzle 15 of any type (shown schematically in the figures) for delivering hydromassage water.

The coupling 10 also has a second cylindrical port 12, in particular in the form of a short pipe stub, which is axially opposite the first port 11.

To the side of the first port 11, the coupling 10 possesses two further axially opposing ports 13, in particular in the form of a short pipe stub. These ports 13 are arranged to be connected respectively to a pipe 17 and a pipe 18 which form part of the piping circuit (of known type and not shown in the figures) through which pressurized water, fed by a pump, passes to feed the various hydromassage nozzles 15.

In practice, the coupling 10 can be a usual four way box coupling, composed of two tubular elements intersecting as a cross.

Typically, the coupling 10 is applied to the hydromassage tub in an arrangement in which the axis of the two ports 11 and 12 is positioned vertically, with the inlet 151 of the nozzle 15 connected to the port 11 by a short tube 152 bent at an angle, such as an elbow connector. In the embodiment shown in the figures, the first port 11 faces upwards, the second port 12 facing downwards.

To the second port 12 there is fixed below it a cylinder-piston unit indicated overall by 20, the axis of which coincides with the axis of the two ports 11 and 12.

The cylinder-piston unit 20 comprises a lower part 21, overall of cylindrical shape, the upper portion 21' of which is forced into the second port 12 and made rigid with that port by a threaded ring nut 51 which axially engages the portion 21' and is screwed onto the threaded outer surface of the port 12.

In the part 21 there is an axial cylindrical chamber 22 within which a rod 23 moves together with its piston 24.

In the embodiment shown in the figures, the part 21 possesses an axial cavity 21a containing as an exact fit a cylindrical sleeve 25 defining the side wall of said axial chamber.

The rod 23 carries at its lower end a piston 24 formed with a seal gasket positioned about the rod 23, and sliding against the inner surface of the sleeve 25.

The upper portion 21' of the part 21 comprises a widening of the diameter of its axial cavity 21a; this widening contains an upper closure member 26, which closes the upper end of the cylindrical chamber 22 and has a hole 27 through which the rod 23 sealedly passes as an exact fit. In the chamber 22 above the piston 24, there is provided a spring 33 acting under compression to constantly urge the rod 23 downwards.

In the lower portion of the part 21 there is provided a port 28, to be connected to a feed pipe 52 for pressurized fluid (typically air). Said port 28 reaches the bottom of the sleeve 25 and communicates with the axial chamber 22 via a passage 29 provided in the lower edge, and allowing fluid to pass between the port 28 and the chamber 22.

The diameter of the outer surface of the lower portion of the closure member 26 is slightly less than the diameter of the corresponding cylindrical surface of the cavity 21a of the part 21. Hence between these two surfaces a thin cylindrical interspace P1 remains defined. Coaxially with the interspace P1 there is provided a more internal second interspace P2 between the outer surface of the sleeve 25 and the inner cylindrical surface of the member 26, which surrounds the upper region of the sleeve 25.

The interspace P2 communicates with the first interspace P1 via a pair of radial through holes 31 provided in the closure member 26. In its turn, the interspace P2 communicates with the upper region of the axial chamber 22 via dead holes 34 provided in the top of the cavity 21a. The thin radial interspace P3 communicates with the aforesaid cylindrical interspace P1 and with the external environment via a vertical hole 32 provided in the upper portion 21' of the part 21 in correspondence with a flat face 53 provided on the lower portion of the part 21.

On feeding fluid under pressure through the port 28, it penetrates into that part of the axial chamber 22 below the piston 24 and, overcoming the thrust of the spring 33, moves the rod 23 upwards. Simultaneously, the air present in that part of the chamber 22 above the piston 24 is discharged to the outside through the holes 31, 32 and 34 and said interspaces P1, P2 and P3.

On the upper end of the rod 23 there is fixed a valving element 40 positioned within the cavity of the coupling 10, having a circular plan shape. The valving element 40 is composed of a substantially disc-shaped lower portion 41 overlaid by an upper portion 42 of spherical cap shape.

At the base of the cap 42 there is provided an annular gasket 43 arranged to engage, in such a manner as to form a seal, with a corresponding annular seat 44 positioned in correspondence with the lower end of the first port 11. The seat 44 is formed by a flat ring the outer cylindrical surface of which is forced into contact with the cylindrical inner surface of the port 11.

Normally, ie when the cylinder-piston unit 20 is not subjected to the action of the pressurized fluid, the valving element 40 is maintained low, on the second port 12, by the action of the spring 33. When in this position the valving element 40 does not hinder water passage through the coupling 10, as it occupies only a small part of the cross-section of the chamber in the coupling 10.

Following upward movement of the rod 23, caused by pressurized fluid fed into the chamber 22, the valving element 40 rises until its annular gasket 43 presses against the seat 44 to completely close the cross-section of the port 11 and hence close access to the nozzle 15 by the liquid present in the pipes 17 and 18.

When in this position the valving element does not hinder water passage between the two ports 13, because again in this case it occupies only a small part of the cross-section of the chamber in the coupling 10. The rod 23 also does not hinder water passage between the ports 13, it occupying only a part of the cross-section of the chamber in the coupling 10.

In use, on feeding fluid under pressure into the bottom of the chamber 22 of the closure units applied to the various nozzles 15, the ports 11 which connect the piping circuit to the nozzles 15 close to isolate the tub interior from the piping circuit, and hence obtain nozzle closure, whereas the piping circuit remains open, in particular to effect a wash cycle on the various pipes.

As an alternative to compressed air, pressurized water, for example originating from the usual public water main, can be advantageously used.

Furthermore, the cylinder-piston unit 20 can be replaced by an electrically operated actuator.

Numerous modifications of a practical and applicational nature can be made to the invention, but without leaving the scope of the inventive idea as hereinafter claimed.

## Claims

1. A closure and connection unit for hydromassage nozzles, in hydromassage tubs having a piping circuit for circulation of the nozzle feed water, comprising
a connection coupling (10) for the,hydromassage water circulation pipes,
a valving element (40) axially movable, within the coupling chamber, between a first port (11) and a second port (12) to close the first port (11), and carried by a stem (23) positioned axially through the second port (12),
means (20) axially moving the stem (23) of the valving element (40), to cause the valving element (40) to lie against the first port (11) and to close it, or alternatively to lie in a lowered position spaced from the first port (11) to open it,
**characterised by** that
the connection coupling (10) is in form of a four way box coupling, composed of two tubular elements intersecting as a cross, having a first port (11) connected to the inlet (151) of the nozzle (15), a second port (12) axially opposite the first port (11), and two further axially opposing ports (13),
the two opposing ports (13) being connected to pipes (17, 18) of the piping circuit so that pressurized water passes between said two opposing ports (13) to feed the hydromassage nozzles (15) or effect a wash cycle on the piping circuit,
the valving element (40) and the stem (23) occupying only a part of the cross-section of the coupling chamber when the valving element (40) lies against the first port (11),
and the valving element (40) being partially housed within the second port (12), so occupying only a part of the cross-section of the coupling chamber when lies in the lowered position thus enabling fluid connection among the first port (11) and the two opposing ports.

2. A closure and connection unit as claimed in claim 1, **characterised by** comprising a cylinder-piston unit (20) positioned external to the coupling (10) in correspondence with the second port (12), having a rod (23) defining the stem carrying the valving element (40), and an operating chamber (22) within which there moves a piston (24) fixed to the rod (23) and communicating with operating fluid introduction means, to operate the piston (24).

3. A closure and connection unit as claimed in claim 1, **characterised in that** said coupling (10) is applied to the tub in an arrangement in which the axis common with the first port (11) and second port (12) is vertical and the inlet (151) of the nozzle (15) is connected to the first port (11) of the coupling by a short tube (152) bent through an angle of about 90 degrees.

4. A closure and connection unit as claimed in claim 1, **characterised in that** the valving element (40) carries an annular gasket (43) arranged to engage, in such a manner as to form a seal, with a corresponding annular seat (44) positioned in correspondence with the lower end of the first port (11). said seat (44) being formed by a flat ring the outer cylindrical surface of which is forced into contact with the cylindrical inner surface of the first port (11).

## Patentansprüche

1. Schließ- und Anschlusseinheit für Hydromassagedüsen in Hydromassage-Badewannen mit einem Rohrleitungskreislauf zur Zirkulation des Düsenspeisewassers, die
eine Anschlusskupplung (10) für die Hy-dromassage-Wasserzirkulationsrohre,
ein innerhalb der Kupplungskammer zwischen einer ersten Öffnung (11) und einer zweiten Öffnung (12) zum Schließen der ersten Öffnung (11) axial bewegbares Ventilelement (40), welches durch einen axial durch die zweite Öffnung (12) hindurch positionierten Vorbau (23) getragen ist,
Einrichtungen (20) zum axialen Bewegen des Vorbaus (23) des Ventilelementes (40) aufweist, um das Ventilelement (40) zum Anliegen gegen die erste Öffnung (11) und zum Schließen derselben, oder alternativ zum Liegen in einer abgesenkten, von der ersten Öffnung (11) beabstandeten Position zu veranlassen, um dieselbe zu öffnen,
**dadurch gekennzeichnet, dass**
die Anschlusskupplung (10) in Form einer aus zwei sich in Kreuzform schneidenden rohrförmigen Elementen bestehenden Vier-Wege-Muffenkupplung ausgebildet ist, die eine mit dem Einlass (151) der Düse (15) verbundene erste Öffnung (11), eine der ersten Öffnung (11) axial gegenüberliegende zweite Öffnung (12) und zwei weitere, einander axial gegenüberliegende Öffnungen (13) aufweist,
die zwei einander gegenüberliegenden Öffnungen (13) mit Rohren (17,18) des Rohrleitungskreislaufes so verbunden sind, dass druckbeaufschlagtes Wasser zwischen den zwei einander gegenüberliegenden Öffnungen (13) hindurchfließt, um die Hydromassagedüsen (15) zu speisen oder einen Waschzyklus in dem Rohrleitungskreislauf zu bewirken,
das Ventilelement (40) und der Vorbau (23) nur einen Teil des Querschnittes der Kupplungskammer belegen, wenn das Ventilelement (40) gegen die erste Öffnung (11) anliegt,
und das Ventilelement (40) teilweise innerhalb der zweiten Öffnung (12) untergebracht ist und so nur einen Teil des Querschnittes der Kupplungskammer belegt, wenn es sich in seiner abgesenkten Position befindet, wodurch eine Strömungsverbindung zwischen der ersten Öffnung (11) und den zwei einander gegenüberliegenden Öffnungen ermöglicht wird.

2. Schließ- und Anschlusseinheit nach Anspruch 1,
**dadurch gekennzeichnet, dass**
sie eine außerhalb der Kupplung (10) mit der zweiten Öffnung (12) in Übereinstimmung positionierte Zylinder-Kolben-Einheit (20) mit einer Stange (23), die den das Ventilelement (40) tragenden Vorbau festlegt, sowie eine Arbeitskammer (22) aufweist, innerhalb welcher sich ein an der Stange (23) befestigter und mit Arbeitsflüssigkeitseinleitungseinrichtungen zur Betätigung des Kolbens (24) in Verbindung stehender Kolben (24) bewegt.

3. Schließ- und Anschlusseinheit nach Anspruch 1,
**dadurch gekennzeichnet, dass**
die Kupplung (10) an der Badewanne in Form einer Anordnung angebracht ist, bei welcher die gemeinsame Achse mit der ersten Öffnung (11) und der zweiten Öffnung (12) vertikal ist und der Einlass (151) der Düse (15) mittels eines mit einem Winkel von etwa 90 Grad gebogenen kurzen Rohres (152) mit der ersten Öffnung (11) verbunden ist.

4. Schließ- und Anschlusseinheit nach Anspruch 1,
**dadurch gekennzeichnet, dass**
das Ventilelement (40) eine ringförmige Dichtung (43) trägt, die so angeordnet ist, dass sie mit einem mit dem unteren Ende der ersten Öffnung (11) in Übereinstimmung positionierten ringförmigen Sitz (44) so in Eingriff geht, dass sie eine Dichtung bildet, wobei der Sitz (44) aus einem Flachring ausgebildet ist, dessen zylindrische Außenfläche mit der zylindrischen Innenfläche der ersten Öffnung (11) in Kontakt gezwungen wird.

## Revendications

1. Unité de fermeture et de raccordement pour buses d'hydromassage, dans des bacs d'hydromassage ayant un circuit de canalisations destiné à la circulation de l'eau d'alimentation des buses, comprenant un raccord (10) des conduites de circulation d'eau d'hydromassage, un élément d'obturation (40) mobile axialement, placé dans la chambre du raccord, entre un premier orifice (11) et un second orifice (12) afin qu'il ferme le premier orifice (11), et porté par une tige (23) positionnée axialement dans le second orifice (12), et
un dispositif (20) de déplacement axial de la tige (23) de l'élément d'obturation (40) destiné à provoquer la disposition de l'élément d'obturation (40) contre le premier orifice (11) et la fermeture de celui-ci ou au contraire sa disposition en position basse à distance du premier orifice (11) afin que celui-ci soit ouvert,
**caractérisée en ce que**
le raccord (10) est sous forme d'un raccord à boîtier à quatre voies composé de deux éléments tubulaires se recoupant en croix, ayant un premier orifice (11) raccordé à l'entrée (151) de la buse (15), un second orifice (12) axialement opposé au premier orifice (11) et deux orifices supplémentaires axialement opposés (13),
les deux orifices opposés (13) étant raccordés à des tubes (17, 18) du circuit de canalisations de manière que l'eau sous pression circule entre les deux orifices opposés (13) pour alimenter les buses d'hydromassage (15) ou exécuter un cycle de lavage sur le circuit de canalisations,
l'élément d'obturation (40) et la tige (23) occupant seulement une partie de la section de la chambre du raccord lorsque l'élément d'obturation (40) est en appui contre le premier orifice (11), et
l'élément d'obturation (40) étant logé partiellement dans le second orifice (12) afin qu'il occupe seulement une partie de la section de la chambre du raccord lorsqu'il est en position basse et permette ainsi le raccordement pour le fluide entre le premier orifice (11) et les deux orifices opposés.

2. Unité de fermeture et de raccordement selon la revendication 1, **caractérisée en ce qu'**elle comprend une unité (20) à cylindre et piston disposée à l'extérieur du raccord (10) en position correspondant au second orifice (12), ayant une tige (23) constituant la tige qui porte l'élément d'obturation (40), et une chambre de manoeuvre (22) dans laquelle se déplace un piston (24) fixé à la tige (23) et communiquant avec un dispositif d'introduction d'un fluide de travail destiné à la commande du piston (24).

3. Unité de fermeture et de raccordement selon la revendication 1, **caractérisée en ce que** le raccord (10) est appliqué au bac avec une disposition dans laquelle l'axe commun du premier orifice (11) et du second orifice (12) est vertical et l'entrée (151) de la buse (15) est raccordée au premier orifice (11) du raccord par un court tube (152) coudé d'un angle d'environ 90°.

4. Unité de fermeture et de raccordement selon la revendication 1, **caractérisée en ce que** l'élément d'obturation (40) porte une garniture annulaire (43) destinée à coopérer, d'une manière formant un joint d'étanchéité, avec un siège annulaire correspondant (44) positionné afin qu'il corresponde à l'extrémité inférieure du premier orifice (11), le siège (44) étant formé par un anneau plat dont la surface cylindrique externe est chassée au contact de la surface cylindrique interne du premier orifice (11).
